Europäisches Patentamt

European Patent Office

Office européen des brevets

(19)

(11) Numéro de publication : **0 152 351 B2**

(12) # NOUVEAU FASCICULE DE BREVET EUROPEEN

(45) Date de publication du nouveau fascicule du brevet : **21.07.93 Bulletin 93/29**

(51) Int. Cl.$^5$ : **A23G 9/02**

(21) Numéro de dépôt : **85400204.5**

(22) Date de dépôt : **07.02.85**

(54) **Crème glacée sans sucre et son procédé de préparation.**

Le dossier contient des informations techniques présentées postérieurement au dépôt de la demande et ne figurant pas dans le présent fascicule.

(30) Priorité : **07.02.84 FR 8401802**

(43) Date de publication de la demande : **21.08.85 Bulletin 85/34**

(45) Mention de la délivrance du brevet : **01.06.88 Bulletin 88/22**

(45) Mention de la décision concernant l'opposition : **21.07.93 Bulletin 93/29**

(84) Etats contractants désignés : **BE CH DE GB IT LI NL SE**

(56) Documents cités :
**CA-A- 899 143**
**DE-A- 3 000 465**
**DE-C- 810 341**
**FR-A- 2 126 296**
**FR-A- 2 502 495**
**GB-A- 629 306**
**GB-A- 1 239 056**

(56) Documents cités :
**GB-A- 2 038 832**
**GB-A- 2 072 679**
**US-A- 2 437 080**
**US-A- 3 329 507**
**US-A- 3 335 013**
**US-A- 3 928 649**
**US-A- 4 049 832**
**US-A- 4 279 931**
**CHEMISCHES ZENTRALLBLATT, vol. 125, no. 45, 1954, page 10368, dernière référence; C.G. ROBERTS et al.: "Eiskrem mit niedrigem Kohlenhydratgehalt für Diabetiker"**
**CHEMISTRY, vol. 1, p. 508**
**STARCH, 37, (1985), no.4, p. 136**
**Proc ERGOB Conf. Geneva 1978, pp. 145-152**

(73) Titulaire : **Roquette Frères**
**F-62136 Lestrem (FR)**

(72) Inventeur : **Serpelloni, Michel**
**270, Boulevard Voltaire**
**F-62400 Béthune (FR)**
Inventeur : **Bussiere, Guy**
**64, rue de la Lys**
**F-59253 La Gorgue (FR)**

(74) Mandataire : **Koch, Gustave et al**
**Cabinet PLASSERAUD 84, rue d'Amsterdam**
**F-75009 Paris (FR)**

EP 0 152 351 B2

## Description

L'invention a pour objet une crème glacée sans sucre: elle en vise également le procédé de préparation.

Par le qualificatif « sans sucre », on désigne dans le domaine de la confiserie les articles qui ne contiennent ni saccharose, ni dextrose, ni fructose, ni sirops de glucose, ces sucres étant remplacés par des polyols tels que le xylitol, le mannitol, le maltitol, le sorbitol ou les hydrolysats d'amidon hydrogénés, le sorbitol étant de loin le plus utilisé.

C'est ainsi que l'on trouve couramment, sur le marché, des confiseries sans sucre comme les bonbons sucre cuit, les pâtes à mâcher, les chewing-gums et bubble-gums, les marshmallows, les pastilles ou comprimés. Ces confiseries sont commercialisées pour leurs propriétés diététiques et/ou pour leurs propriétés hypocariogènes.

On trouve aussi des crèmes glacées sans sucre dites diététiques et formulées en ayant recours à au moins certains des substituts des sucres énumérés ci-dessus.

Le brevet DE-A-3 000 465 mentionne l'application des hydrolysats d'amidon hydrogénés à la fabrication des crèmes glacées sans apporter aucun exemple.

Le brevet US-A-4 279 931 mentionne l'application des hydrolysats d'amidon hydrogénés à la fabrication d'articles de confiserie en général.

Les brevets GB-A-1 239 056 et CA-A-899 143 mentionnent la possibilité d'utiliser des hydrolysats d'amidon hydrogénés, par ailleurs non définis, dans la fabrication de produits alimentaires peu fermentescibles parmi lesquels les crèmes glacées sont citées sans aucune exemplification.

Il se trouve enfin que les crèmes glacées sans sucre de l'art antérieur ne présentent aucunement ni les caractéristiques de texture, ni les caractéristiques organoleptiques des crèmes glacées classiques; en particulier, leurs caractéristiques de corps, de fonte, d'onctuosité et de tenue en bouche ne sont pas satisfaisantes.

L'invention a pour but, surtout, de fournir, pour répondre aux besoins des industries de la confiserie et des produits laitiers, une crème glacée sans sucre dont les caractéristiques physiques, texturales et organoleptiques se rapprochent très sensiblement de celles des crèmes glacées traditionnelles préparées avec du saccharose.

Or, il est du mérite de la Société Demanderesse d'avoir trouvé que l'incorporation dans la formulation d'une crème glacée sans sucre d'une proportion déterminée de certains oligosaccharides ou polysaccharides hydrogénés permettait d'en améliorer trés sensiblement les caractéristiques organoleptiques et de texture, ces caractéristiques se rapprochant de celles d'une crème glacée traditionnelle.

Les oligosaccharides ou polysaccharides hydrogénés dont il s'agit sont des polyols qui présentent un degré de polymérisation ou DP égal ou supérieur à 3; pour que les propriétés recherchées puissent être obtenues, lesdits polyols hydrogénés doivent être présents en une proportion exprimée en matière sèche sur le produit fini supérieure à 2%, de préférence à 3% ou plus préférentiellement encore 6% en poids, et inférieure à 15%, de préférence à 12% en poids.

Ils peuvent être apportés sous la forme d'hydrolysats d'amidon hydrogénés ou HAH présentant un DE (dextrose équivalent) avant hydrogénation compris entre 25 et 75 et, de préférence, entre 30 et 60 et dont la composition, exprimée sur matière sèche, est la suivante:

sorbitol (DP 1) : 0,1 à 35%, de préférence 0,1 à 19%

maltitol (DP 2) : 8 à 80%, de préférence 20 à 75%

polyols de DP $\geqq$ 3 : complément à 100.

Il s'ensuit que la crème glacée sans sucre selon l'invention est caractérisée par le fait qu'elle présente, à titre d'agent sucrant et de texture, une teneur en polyols hydrogénés de DP égal ou supérieur à 3, supérieure à 2%, de préférence à 3% et plus préférentiellement encore à 6% et inférieure à 15%, de préférence à 12% en poids sec sur le produit fini.

Le procédé, conforme à l'invention, pour préparer la susdite crème glacée sans sucre, est caractérisé par le fait que l'on ajoute aux ingrédients classiques de la crème glacée, à savoir le lait écrémé, les matières grasses, les agents stabilisants et émulsifiants, les arômes, les agents édulcorants artificiels et autres, une quantité de polyols hydrogénés de DP $\geqq$ 3 telle que la teneur de la crème glacée résultante en ces polyols soit supérieure à 2%, de préférence à 3% et plus préférentiellement encore à 6% et inférieure à 15%, de préférence à 12% en poids sec sur le produit fini, ces polyols hydrogénés étant apportés sous la forme d'un HAH présentant avant hydrogénation un DE compris entre 25 et 75, de préférence entre 30 et 60, la composition dudit HAH étant la suivante:

sorbitol (DP 1) : 0,1 à 35%, de préférence 0,1 à 19%

maltitol (DP 2) : 8 à 80%, de préférence 20 à 75%

polyols de DP $\geqq$ 3 : complément à 100.

La proportion de HAH ainsi introduite dans la crème glacée selon l'invention varie en fonction de la composition de cet HAH ainsi qu'en fonction de la nature et de la quantité des polyols simples restant éventuellement présents dans la crème.

Avantageusement, une teneur comprise entre 4,5% et 28%, de préférence entre 6 et 23%, les pourcentages étant exprimés en poids de matière sèche sur le produit fini, permet d'obtenir le meilleur compromis entre les propriétés de goût, de pouvoir sucrant, de texture et de « tenue en bouche ».

Selon un mode de réalisation avantageux de l'invention et propre à améliorer encore davantage les propriétés hypocariogènes de la crème glacée sans sucre selon l'invention, celle-ci présente une teneur en lactose inférieure à 1 % en poids sur sec dans le produit fini.

Pour préparer une telle crème, on fait entrer dans la composition de celle-ci, lors de sa préparation et à la place des produits lactés, notamment le lait écrémé, conventionnellement utilisés, une quantité de 3 à 8% et, de préférence, de 4 à 7% en poids sur le produit fini, de concentrés protéiques laitiers contenant peu ou pas de lactose et pouvant être choisis dans le groupe comprenant:
- les caséinates,
- les protéines laitières ultrafiltrées,
- les protéines sériques ultrafiltrées,
- le babeurre et le babeurre ultrafiltré,
- les protéines sériques délactosées thermo-coagulées.

L'utilisation de ces concentrés protéiques laitiers permet de renforcer les propriétés hypocariogènes des crèmes glacées sans sucre selon l'invention tout en conservant au produit une agréable saveur lactée, généralement recherchée par le consommateur et habituellement amenée par le lactose qui est présent dans les produits laitiers traditionnellement employés pour la fabrication des crèmes glacées.

Selon un autre mode de réalisation avantageux et toujours dans le but d'améliorer les propriétés hypocariogènes du produit fini, on apporte, dans le procédé conforme à l'invention, les oligosaccharides et les polysaccharides hydrogénés de DP $\geqq$ 3 sous la forme d'un HAH dont la composition est la suivante
- sorbitol        0,1 à 19%
- maltitol        35 à 80%, de préférence 40 à 60%
- polyols de DP > 20 pourcentage inférieur à 3%
- polyols de DP
  allant de 3 à 20 complément à 100%.

L'invention pourra être encore mieux comprise à l'aide des exemples comparatifs qui suivent et dans lesquels on fait apparaître la supériorité des crèmes glacées conformes à l'invention à l'aide d'un ensemble de tests dits « de qualité » et qui comprennent:
- un test de pénétrabilité,
- un test de fusion et
- un test de dégustation.

Les échantillons de crème glacée, soumis à ces tests, sont obtenus à partir du produit foisonné réunissant tous les constituants de la creme, ce produit foisonné étant durci à -40 °C pendant 3 heures puis conservé à -20 °C pendant au moins 48 heures pour aboutir à une parfaite congélation.

a) Description du test de pénétrabilité.

Ce test est effectué à l'aide d'un pénétromètre, de la marque SUR-BERLIN 8.

Il consiste à laisser s'enfoncer un corps dans un échantillon de crème glacée.

Le corps pénétrant est constitué d'un cône en ébonite ayant un angle au sommet de 40°, prolongé par un axe, l'ensemble pesant 159,8 g.

L'expérience de pénétration dure 15 secondes et se fait à la température ambiante.

L'échantillon est conservé à -20 °C dans un pot en plastique de 100 cm$^3$ avec un diamètre intérieur de 55 mm, ne comportant pas de couvercle, ce pot étant placé dans un pot plus grand, muni d'un couvercle, ce grâce à quoi on ne modifie pas la surface plane de l'échantillon de crème glacée.

5 heures 30 minutes avant la mesure, les échantillons conservés à -20 °C sont amenés à -15 °C.

Le test de pénétrabilité porte sur 15 échantillons.

Une seule mesure est faite sur chaque échantillon et la pénétrabilité est exprimée par la valeur moyenne des mesures effectuées sur les 15 échantillons, exprimées en millimètre.

La mesure est effectuée dans un minimum de temps, de telle façon que la crème glacée ne subisse pas un début de fusion, ce qui perturberait les résultats.

La limite d'acceptabilité inférieure est de 10 mm. En dessous, la glace est considérée comme trop dure.

La limite d'acceptabilité supérieure est de 18 mm. Au-dessus, la glace est considérée comme trop molle.

EP 0 152 351 B2

b) Description du test de fusion.

Ce test consiste à mesurer la proportion de crème glacée fondue au cours du temps dans les conditions définies ci-après.

La mesure se fait à l'aide d'un système de pesée placé à l'intérieur d'une étuve à +30 °C et à 60% d'humidité relative.

Pour réaliser ce test, on prélève, à partir d'un des échantillons de crème glacée conservés à -20 °C, une carotte cylindrique à l'aide d'un emporte-pièce cylindrique en inox de 42 mm de hauteur et de 25 mm de diamètre intérieur, dont on a recouvert au préalable la paroi extérieure d'une feuille de cellophane. Ceci permet de ne pas coller de crème glacée sur la paroi extérieure du cylindre lors du prélèvement.

Ensuite, on enlève le cellophane et on dispose le cylindre avec l'échantillon de crème glacée à l'intérieur d'un pot muni d'un couvercle, l'ensemble étant maintenu à -20 °C pendant 3 heures 30 minutes dans un congélateur afin de mettre la crème glacée prélevée à bonne température.

Le cylindre contenant la crème glacée est ensuite disposé, à l'intérieur de la susdite étuve, sur une grille à mailles carrées de 5 mm de côté et l'on mesure, à l'aide du système de pesée, la quantité de crème fondue en fonction du temps.

Le résultat des tests est caractérisé par deux valeurs, l'une exprimant le temps nécessaire à l'apparition de la première goutte fondue, l'autre exprimant le temps nécessaire à la fusion de 60% du poids de l'échantillon.

La limite d'acceptabilité inférieure relative au temps nécessaire à la fusion de 60% du poids de l'échantillon est de 17 minutes 30 secondes. En dessous de cette valeur, la glace fond trop vite et son corps est jugé insuffisant, l'onctuosité étant trop faible.

c) Description du test de dégustation.

Un ensemble de dégustateurs doivent procéder chacun à la dégustation de 3 échantillons de chaque crème glacée amenés auparavant à la température de -15 °C.

Ils doivent affecter
- une note de 0 à 10 à
    . la saveur sucrée,
    . la résistance à la coupe,
    . la vitesse de fusion,
- une note de 0 à 5 à
    . la fluidité et la viscosité,
    . la granulosité et l'onctuosité.

Exemple 1

Cet exemple établit une comparaison entre
- une crème glacée traditionnelle, à base de lait écrémé, de saccharose et de sirop de glucose,
- une crème glacée sans sucre conventionnelle au sorbitol et
- deux crèmes glacées sans sucre selon l'invention comportant toutes deux un hydrolysat d'amidon hydrogéné.

1. Crème glacée traditionnelle au saccharose

La composition de cette crème glacée est la suivante:

| | |
|---|---|
| Saccharose | 15,5 % en poids |
| Matière grasse laitière anhydre | 8,4 % en poids |
| Lait écrémé | 10,0 % en poids |
| Sirop de glucose déshydraté 40 DE | 4,5 % en poids |
| Stabilisant émulsifiant intégrés commercialisé par GRINSTED PRODUCTS sous la marque CREMODAN SE 30 F | 0,48% en poids |
| Arôme vanille, commercialisé par la Société MERO | 0,35% en poids |
| Eau | q.s.p. 100%. |

Le saccharose, le sirop de glucose 40 DE, le lait écrémé et le stabilisant émulsifiant intégrés sont tout d'abord mélangés à sec en vue d'éviter la formation de grumeaux lors de l'incorporation de l'eau.

4

Ensuite, ce mélange est dispersé progressivement sous agitation rapide dans l'eau contenue dans une cuve munie d'une double enveloppe de chauffage.

L'ensemble est préchauffé à 50 °C, température à laquelle on incorpore la matière grasse.

La préparation se poursuit par une pasteurisation de 3 minutes à 80 °C, puis par une homogénéisation à 75 °C, à une pression d'entrée de 150 kg/cm² et une pression de sortie de 50 kg/ cm².

Le mélange ainsi réalisé est refroidi à 4 °C, puis laissé reposer pour arriver à maturation, pendant une heure à cette température sous agitation lente. On ajoute ensuite l'arôme de vanille.

Le produit foisonné est durci à -40 °C pendant 3 heures, puis conservé à -20 °C pendant au moins 48 heures afin d'obtenir une parfaite congélation de la crème glacée avant de procéder aux tests de qualité décrits plus haut. Les résultats obtenus avec la crème glacée au saccharose définie ci-dessus sont résumés dans tableau 1.

### 2. Crème glacée sans sucre au sorbitol

La composition, en poids, de cette crème glacée est la suivante:

| | |
|---|---|
| Sirop de sorbitol à 70% de matières sèches | 28,6 % en poids |
| Matière grasse laitière anhydre | 8,4 % en poids |
| Lait écrémé | 10,0 % en poids |
| Stabilisant émulsifiant CREMODAN SE 30 F | 0,48% en poids |
| Aspartame | 0,02% en poids |
| Arôme vanille MERO | 0,35% en poids |
| Eau | q.s.p. 100%. |

Le sirop de sorbitol utilisé dans cet exemple ainsi que dans les exemples suivants a la composition suivante, les pourcentages étant exprimés en poids sur la matière sèche:

| | |
|---|---|
| Produits de DP 1 | 84 % |
| Produits de DP 2 | 10,5% |
| Produits de DP 3 | 3 % |
| Produits de DP $\geqslant$ 3 | 2,5% |

La teneur de cette crème glacée en polyols de DP $\geq$ 3 est donc égale à 1,10%.

Cette crème glacée est préparée comme suit.

On disperse tout d'abord, dans le mélange eau-sirop de sorbitol, la poudre comprenant le stabilisant-émulsifiant et le lait écrémé, puis l'ensemble est chauffé à 50 °C.

A ce mélange des trois constituants dans l'eau, on ajoute la matière grasse anhydre avant de procéder à une pasteurisation de 3 minutes à 80 °C.

Le produit est ensuite homogénéisé à 75 °C à une pression de 150 kg/cm² en entrée et de 50 kg/cm² en sortie.

Le mélange homogénéisé est alors refroidi à 4 °C et maintenu à cette température pendant 1 heure sous agitation lente.

On ajoute à ce stade l'arôme vanille et l'aspartame. Le foisonnement est d'environ 100%. On observe déjà à ce stade que la crème glacée est beaucoup plus molle que la crème témoin au saccharose.

Enfin, le produit fini est durci à -40 °C pendant trois heures, puis conservé à -20 °C pendant 48 heures.

On procède alors aux tests de qualité, dont les résultats sont indiqués dans le tableau I.

### 3. Crème glacée selon l'invention

Deux crèmes glacées sans sucre comportant deux taux différents d'hydrolysat d'amidon hydrogéné sont préparées, les compositions étant les suivantes:

5

|  | Crème N° 1 | Crème N° 2 |
|---|---|---|
| HAH à 75% M.S. | 23,2 | 10,4 |
| Matière grasse laitière anhydre | 8,4 | 8,4 |
| Lait écrémé | 10 | 10 |
| Sirop de sorbitol à 70% M.S. | 3,7 | 10,3 |
| Stabilisant Emulsifiant CREMODAN SE 30 F | 0,48 | 0,48 |
| Aspartame | 0,02 | 0,02 |
| Arôme vanille MERO | 0,35 | 0,35 |
| Eau | qsp 100% | qsp 100% |

L'HAH utilisé, d'un DE avant hydrogénation voisin de 50, a la composition suivante (% en poids sur matière sèche):

| Sorbitol | 7,0 |
|---|---|
| Maltitol | 52,5 |
| DP 3 | 18 |
| DP 3 à 20 | 21,5 |
| DP > 20 | 1 |

Le procédé de préparation est celui décrit ci-dessus en rapport avec les crèmes glacées au saccharose et au sorbitol, l'HAH étant ajouté en même temps que le sirop de sorbitol.

La crème glacée n° 1 présente une matière sèche de 38,9%, analogue à celle des deux crèmes préparées précédemment, et la crème n° 2 présente une matière sèche de 33,9%.

Dans les deux cas, la crème glacée est fermée à la sortie du congélateur et sa dureté est comparable à celle de la crème témoin au saccharose.

La crème n° 1 présente une teneur en polyols hydrogénés de DP $\geqq$ 3 égale à 7,19% et la crème glacée n° 2 une teneur égale à 3,55%.

Les résultats des tests de qualité effectués sur ces deux crèmes glacées sont également réunis dans le tableau I.

Tableau I

| | M.S. % | Pénétra-bilité (en mm) | Fusion | | Dégustation | | | | |
|---|---|---|---|---|---|---|---|---|---|
| | | | Point de goutte (min.) | 60%* de fonte (min.) | Saveur sucrée ** | Résistance à la coupe ** | Vitesse de fusion ** | Fluidité Viscosité *** | Granulosité Onctuosité *** |
| Crème glacée au saccharose | 39,25 | 12,6 | 9'25 | 24''30 | 6 | 5 | 6 | 3,6 | 3,6 |
| Crème glacée au sorbitol | 39,25 | 17,8 | 7'30 | 16'50 | 6,3 | 3 | 8 | 2,7 | 2 |
| Crème glacée n° 1 | 39,25 | 12,6 | 9'45 | 25' | 5,8 | 5,7 | 6 | 3,8 | 4,2 |
| Crème glacée n° 2 | 34,25 | 11,16 | 11' | 32'30 | 5 | 5,9 | 6,2 | 3,6 | 3,8 |

\* temps nécessaire pour fondre 60% en poids de crème
\*\* notes de 0 à 10
\*\*\* notes 0 à 5

Il résulte des indications réunies dans le tableau I que la crème glacée au sorbitol fond trop vite et qu'elle ne présente pas une onctuosité suffisante.

Les dégustateurs lui attribuent une note d'onctuosité égale à 2 sur 5 alors qu'ils attribuent une note très sensiblement supérieure aux crèmes glacées selon l'invention n° 1 et n° 2, qui se comparent favorablement à la crème glacée au saccharose. La crème glacée n° 1 est jugée comme étant la meilleure.

Exemple 2

Cet exemple établit une comparaison entre une crème glacée au saccharose, une crème glacée au sorbitol et deux crèmes glacées selon l'invention, la fraction lactée étant constituée d'un mélange de protéines délactosées à la place de lait écrémé.

1. Crème glacée témoin au saccharose

Sa composition en poids est la suivante:

| | |
|---|---|
| Saccharose | 15,5 % en poids |
| Matière grasse laitière anhydre | 8,4 % en poids |
| Sirop de glucose à 60 DE, à 80% M.S. | 6,3 % en poids |
| Mélange de protéines laitières délactosées, commercialisé par la Société BEL INDUSTRIES sous l'appellation NOLLIBEL P70 | 5,3 % en poids |
| Sirop de glucose déshydraté à 40 DE | 4,5 % en poids |
| Stabilisant Emuslifiant CREMODAN SE 30 F | 0,48% en poids |
| Arôme vanille MERO | 0,35% en poids |
| Eau | qsp 100% |

Le procédé de préparation est identique à celui de l'exemple I.1, mis à part le fait que le mélange comprenant le saccharose, le sirop de glucose 40 DE, le concentré protéique et le stabilisant émulsifiant est dispersé dans le mélange du sirop de glucose 60 DE et de l'eau.

On procède aux tests de qualité dont les résultats sont réunis dans le tableau II.

2. Crème glacée au sorbitol

Sa composition en poids est la suivante:

| | |
|---|---|
| Sirop de sorbitol à 70% de matière sèche | 35,7 % en poids |
| Matière grasse laitière anhydre | 8,4 % en poids |
| Mélange de protéines laitières délactosée NOLLIBEL P70 | 5,3 % en poids |
| Stabilisant Emulsifiant CREMODAN SE 30 F | 1 % en poids |
| Aspartame | 0,02% en poids |
| Arôme vanille MERO | 0,35% en poids |
| Eau | qsp 100% |

On note que la quantité de stabilisant-émulsifiant intégrés a dû être augmentée considérablement afin d'essayer de compenser la perte évidente d'onctuosité de la crème glacée due à l'emploi du sorbitol.

Le procédé de préparation de cette crème glacée est le suivant.

On disperse tout d'abord dans le mélange eau-sirop de sorbitol la poudre comprenant le stabilisant-émulsifiant et le mélange de protéines laitières délactosées. L'ensemble est ensuite chauffé à 50 °C.

A ce mélange de trois des constituants dans l'eau, on ajoute la matière grasse anhydre avant de procéder à la pasteurisation de 3 minutes à 80 °C.

Le produit est ensuite homogénéisé à 75 °C, à une pression de 150 kg/cm$^2$ en entrée et de 50 kg/cm$^2$ en sortie.

Le mélange homogénéisé est refroidi à 4 °C et maintenu à cette température pendant 1 heure sous agitation lente.

On ajoute à ce stade l'arôme vanille ainsi que l'aspartame.

Le foisonnement est d'environ 100%. A la sortie du congélateur, la crème glacée est d'une fermeté comparable à celle du témoin, grâce à l'augmentation très sensible de la quantité d'émulsifiant-stabilisant.

Le produit fini est durci à -40 °C pendant trois heures, puis conservé à -20 °C pendant 48 heures.

On procède alors aux tests de qualité dont les résultats sont réunis dans le tableau II.

3. Crème glacée selon l'invention

Les deux crèmes glacées préparées conformément à l'invention présentent la composition en poids suivante:

|  | Crème N° 3 | Crème N° 4 |
|---|---|---|
| HAH à 75% M.S. | 28,7 | 16,7 |
| Matière grasse laitière anhydre | 8,4 | 8,4 |
| Mélange de protéines laitières délactosées NOLLIBEL P70 | 5,3 | 5,3 |
| Sirop de sorbitol à 70% M.S. | 4,9 | 17,9 |
| Stabilisant Emulsifiant CREMODAN SE 30 F | 0,48 | 0,48 |
| Aspartame | 0,02 | 0,02 |
| Arôme vanille MERO | 0,35 | 0,35 |
| Eau | qsp 100% | qsp 100% |

Le mode de préparation est celui de la préparation de la susdite crème glacée au sorbitol, l'HAH étant ajouté en même temps que le sirop de sorbitol et l'aspartame étant ajouté en même temps que l'arôme.

L'HAH mis en oeuvre a la même composition que celui utilisé à l'exemple 1.

La crème glacée n° 3 présente une teneur en polyols hydrogénés de DP égal ou supérieur à 3 égale à 8,90% et la crème glacée n° 4 une teneur égale à 5,76%. Leur teneur en lactose est égale à 0,8%.

Les résultats des tests de qualité sont réunis dans le tableau II.

Tableau II

| | M.S. % | Pénétra-bilité (en mm) | Fusion | | Dégustation | | | | |
|---|---|---|---|---|---|---|---|---|---|
| | | | Point de goutte (min.) | 60%* de fonte (min.) | Saveur sucrée ** | Résistance à la coupe ** | Vitesse de fusion ** | Fluidité Viscosité *** | Granulosité Onctuosité *** |
| Crème glacée au saccharose | 39,55 | 14,75 | 8'20 | 20'48 | 6 | 3,5 | 7 | 3 | 3 |
| Crème glacée au sorbitol | 40,05 | 23 | 6'30 | 14'30 | 5,5 | 2,5 | 8,1 | 3 | 2 |
| Crème glacée n° 3 | 39,50 | 16,6 | 7'56 | 18'42 | 6 | 3 | 7 | 2,5 | 3 |
| Crème glacée n° 4 | 39,60 | 18 | 7' | 17'30 | 6 | 2,5 | 7,5 | 2 | 2,5 |

* temps nécessaire pour fondre 60% en poids de crème
** notes de 0 à 10
*** notes de 0 à 5

A l'examen des résultats réunis dans le tableau II, on constate que la crème glacée formulée à l'aide du seul sirop de sorbitol, développe une onctuosité inférieure à celle du témoin.

L'incorporation de polyols hydrogénés de DP $\geqq$ 3 permet d'obtenir une nette amélioration de cette onctuosité et de rapprocher les autres caractéristiques de celles de la crème glacée témoin au saccharose.

La crème glacée n° 3, qui comporte un taux de polyols hydrogénés de DP $\geqq$ 3 égal à 8,9%, est supérieure en tous points, à la crème glacée n° 4.

Les dégustateurs jugent très favorablement et de façon unanime les caractéristiques organoleptiques, de corps, de texture et de tenue en bouche des crèmes glacées conformes à l'invention.

**Revendications**

1. Crème glacée sans sucre caractérisée par le fait qu'elle présente, à titre d'agent sucrant et de texture, une teneur comprise entre 4,5% et 28%, de préférence entre 6 et 23%, les pourcentages étant exprimés en poids de matière sèche sur le produit fini, d'un HAH présentant avant hydrogénation un DE compris entre 25 et 75, de préférence 30 et 60, la composition dudit HAH étant la suivante:
   - sorbitol (DP 1) 0,1 à 35%, de préférence 0,1 à 19%
   - maltitol (DP 2) 8 à 80%, de préférence 20 à 75%
   - polyols de DP $\geq$ 3 complément à 100%,

   ce grâce à quoi la teneur de ladite crème glacée sans sucre en polyols hydrogénés de DP $\geq$ 3 est supérieure à 2%, de préférence à 3% et plus préférentiellement encore à 6% et est inférieure à 15%, de préférence à 12% en poids sec sur le produit fini.

2. Crème glacée sans sucre selon la revendication 1 caractérisée par le fait qu'elle comprend une quantité de 3 à 8%, et de préférence de 4 à 7% en poids sur le produit fini de concentrés protéiques laitiers contenant peu ou pas de lactose et pouvant être choisis dans le groupe comprenant:
   - les caséinates,
   - les protéines laitières ultrafiltrées
   - les protéines sériques ultrafiltrées
   - le babeurre et le babeurre ultrafiltré
   - les protéines sériques délactosées thermo-coagulées

   ce grâce à quoi sa teneur en lactose est inférieure à 1%.

3. Procédé pour préparer la crème glacée sans sucre selon la revendication 1, caractérisé par le fait que l'on ajoute aux ingrédients classiques de la crème glacée, à savoir le lait écrémé, les matières grasses, les agents stabilisants et émulsifiants, les arômes, les agents édulcorants artificiels et autres, une quantité de polyols hydrogénés de DP $\geq$ 3 telle que la teneur de la crème glacée résultante en ces polyols soit supérieure à 2%, de préférence à 3% et plus préférentiellement encore à 6% et inférieure à 15%, de préférence à 12% en poids sec sur le produit fini, ces polyols hydrogénés étant apportés sous la forme d'un HAH présentant avant hydrogénation un DE compris entre 25 et 75, de préférence entre 30 et 60, la composition dudit HAH étant la suivante:

   | | |
   |---|---|
   | sorbitol (DP 1) | 0,1 à 35%, de préférence 0,1 à 19% |
   | maltitol (DP 2) | 8 à 80%, de préférence 20 à 75% |
   | polyols de DP $\geq$ 3 | complément à 100% |

   la proportion de HAH introduite dans la crème glacée étant avantageusement telle que la teneur de la crème glacée en HAH soit comprise entre 4,5% et 28%, de préférence entre 6 et 23%, les pourcentages étant exprimés en poids de matière sèche sur le produit fini.

4. Procédé selon la revendication 3, caractérisé par le fait que l'on apporte les oligosaccharides et les polysaccharides hydrogénés de DP $\geq$ 3 sous la forme d'un HAH dont la composition est la suivante:
   - sorbitol        0, 1 à 19%
   - maltitol        35 à 80%, de préférence -TH40 à 60%
   - polyols de DP > 20        pourcentage inférieur à 3%
   - polyols de DP allant de 3 à 20        complément à 100%

   La proportion de HAH introduite dans la crème glacée étant avantageusement telle que la teneur de la crème glacée en HAH soit comprise entre 4,5% et 28%, de préférence entre 6 et 23%, les pourcentages étant exprimés en poids de matière sèche sur le produit fini.

5. Procédé pour préparer une crème glacée selon la revendication 2, caractérisé par le fait
   - d'une part, que l'on ajoute aux ingrédients classiques de la crème glacée, à savoir le lait écrémé, les matières grasses, les agents stabilisants et émulsifiants, les arômes, les agents édulcorants artificiels et autres, une quantité de polyols hydrogénés de DP $\geq$ 3 telle que la teneur de la crème glacée résultante en ces polyols soit supérieure à 2%, de préférence à 3% et plus préférentiellement encore à 6% et inférieure à 15%, de préférence à 12% en poids sec sur le produit fini, ces polyols hydrogénés étant apportés sous la forme d'un HAH présentant avant hydrogénation un DE compris entre 25 et 75, de préférence entre 30 et 60, la composition dudit HAH étant la suivante
     - sorbitol        0,1 à 19%
     - maltitol à 60%        35 à 80%, de préférence 40

- polyols de DP > 20     pourcentage inférieur à 3%
- polyols de DP allant de 3 à 20     complément à 100%,
  la proportion de HAH introduite dans la crème glacée étant avantageusement telle que la teneur de la crème glacée en HAH soit comprise entre 4,5% et 28%, de préférence entre 6 et 23%, les pourcentages étant exprimés en poids de matière sèche sur le produit fini.
- d'autre part, qu'on fait entrer dans la composition de celle-ci, lors de sa préparation et à la place des produits lactés, notamment le lait écrémé, conventionnellement utilisés, une quantité de 3 à 8% et, de préférence, de 4 à 7% en poids sur le produit fini, de concentrés protéiques laitiers contenant peu ou pas de lactose et pouvant être choisis dans le groupe comprenant:
  - les caséinates,
  - les protéines laitières ultrafiltrées,
  - les protéines sériques ultrafiltrées,
  - le babeurre et le babeurre ultrafiltré,
  - les protéines sériques délactosées thermo-coagulées.

## Claims

1. Sugarless ice cream characterized by the fact that it comprises, as sweetening and textural agent, a content comprised between 4.5% and 28%, preferably between 6% and 23%, the percentages being expressed in weight of dry matter in the finished product, of a hydrogenated starch hydrolysate having, before hydrogenation, a DE comprised between 25 and 75, preferably between 30 and 60, the composition of the hydrogenated starch hydrolysate being as follows:
     sorbitol (DP 1): 0.1 to 35%, preferably 0.1 to 19%
     maltitol (DP 2): 8 to 80%, preferably 20 to 75%
     polyols of $DP \geqq 3$: complement to 100,
   the content of the said sugarless ice cream in hydrogenated polyols of $DP \geqq 3$ being thus higher than 2%, preferably than 3% and still more preferably than 6% and is less than 15%, preferably than 12% by weight in dry matter in the finished product.

2. Sugarless ice cream according to claim 1, characterized by the fact that it comprises an amount from 3 to 8%, preferably from 4 to 7% by weight in the finished product, of milk protein concentrates containing little or no lactose which can be selected from the group comprising:
   - caseinates,
   - ultra-filtered milk proteins,
   - ultra-filtered serum proteins,
   - buttermilk and ultra-filtered buttermilk,
   - heat-coagulated delactosed serum proteins, its content in lactose being thus lower than 1%.

3. Process for preparing a sugarless ice cream according to claim 1, characterized by the fact that it is added to conventional ingredients of the ice cream, namely the skimmed milk, the fat, the stabilising and emulsifying agents, the flavoring, the artificial sweeteners and the like, an amount of hydrogenated polyols of $DP \geqq 3$ such that the content of the resulting ice cream in these polyols is higher than 2%, preferably than 3% and still more preferably than 6% and less than 15%, preferably than 12% by weight expressed in dry matter in the finished product, these hydrogenated polyols being introduced in the form of an HSH having, before hydrogenation, a DE comprised between 25 and 75, preferably between 30 and 60, the composition of said HSH being:
     sorbitol (DP 1): 0.1 to 35%, preferably 0.1 to 19%
     maltitol (DP 2): 8 to 80%, preferably 20 to 75%
     polyols of $DP \geqq 3$: complement to 100,
   the proportion of HSH introduced into the ice cream being advantageously such that the content of the ice cream in HSH is comprised between 4.5% and 28%, preferably between 6% and 23%, the percentages being expressed by weight in dry matter in the finished product.

4. Process according to claim 3, characterized by the fact that the hydrogenated oligosaccharides and polysaccharides of $DP \geqq 3$ are introduced in the form of an HSH whose composition is as follows:
   - sorbitol     0.1 to 19%
   - maltitol     35 to 80%, preferably 40 to 60%

- polyols of DP > 20        percentage less than 3%
- polyols of DP ranging from 3 to 20       complement to 100%,

the proportion of HSH introduced into the ice cream being advantageously such that the content of the ice cream in HSH is comprised between 4.5% and 28%, preferably between 6% and 23%, the percentages being expressed by weight in dry matter in the finished product.

5. Process for preparing a sugarless ice cream according to claim 2, characterized by the fact that
   - on the one hand, it is added to conventional ingredients of the ice cream, namely the skimmed milk, the fat, the stabilising and emulsifying agents, the flavoring, the artificial sweeteners and the like, an amount of hydrogenated polyols of DP$\geqq$3 such that the content of the resulting ice cream in these polyols is higher than 2%, preferably than 3% and still more preferably than 6% and less than 15%, preferably than 12% by weight expressed in dry matter in the finished product, these hydrogenated polyols being introduced in the form of an HSH having, before hydrogenation, a DE comprised between 25 and 75, preferably between 30 and 60, the composition of said HSH being:
     - sorbitol      0.1 to 19%
     - maltitol      35 to 80%, preferably 40 to 60%
     - polyols of DP > 20      percentage less than 3%
     - polyols of DP ranging from 3 to 20     complement to 100%,

     the proportion of HSH introduced into the ice cream being advantageously such that the content of the ice cream in HSH is comprised between 4.5% and 28%, preferably between 6% and 23%, the percentages being expressed by weight in dry matter in the finished product,

   - on the other hand, there is introduced into the composition of the latter, during its preparation and in place of the milk products, particularly the skimmed milk conventionally used, an amount from 3 to 8%, preferably from 4 to 7% by weight in the finished product, of milk protein concentrates containing little or no lactose which can be selected from the group comprising:
     - caseinates,
     - ultra-filtered milk proteins,
     - ultra-filtered serum proteins,
     - buttermilk and ultra-filtered buttermilk,
     - heat-coagulated delactosed serum proteins.

## Patentansprüche

1. Zuckerfreies Speiseeis, dadurch gekennzeichnet, daß es als Süßungs- und Texturierungsmittel einen Gehalt zwischen 4,5 und 28%, vorzugsweise zwischen 6 und 23% aufweist, an einem HAH, das vor der Hydrogenation einen DE zwischen 25 und 75, vorzugsweise zwischen 30 und 60 aufweist, wobei die Prozentanteile als Trockensubstanzgewicht, bezogen auf das Endprodukt, ausgedrückt sind, wobei die Zusammensetzung dieses HAH die folgende ist:

   Sorbit (DP 1): 0,1 bis 35%, vorzugsweise 0,1 bis 19%

   Maltit (DP 2): 8 bis 80%, vorzugsweise 20 bis 75%

   Polyole mit einem DP $\geqq$ 3: Ergänzung zu 100%,

   wodurch der Gehalt dieses zuckerfreien Speiseeises an hydrierten Polyolen mit einem DP $\geqq$ 3 mehr als 2%, vorzugsweise mehr als 3% und insbesondere mehr als 6% und weniger als 15%, vorzugsweise weniger als 12%, als Trockengewicht, bezogen auf das Endprodukt, beträgt.

2. Zuckerfreies Speiseeis gemäß Anspruch 1, dadurch gekennzeichnet, daß es eine Menge von 3 bis 8 und vorzugsweise von 4 bis 7 Gew.-%, auf das Endprodukt bezogen, an Milch-Proteinkonzentraten enthält, die wenig oder keine Lactose enthalten und ausgewählt sein können aus der Gruppe, umfassend:
   - Caseinate
   - ultrafiltrierte Milchproteine
   - ultrafiltrierte Serumproteine
   - Buttermilch und ultrafiltrierte Buttermilch
   - thermocoagulierte, von Lactose befreite Serumproteine,

   wodurch der Gehalt an Lactose geringer als 1% ist.

3. Verfahren zur Herstellung eines zuckerfreien Speiseeises gemäß Anspruch 1, dadurch gekennzeichnet, daß man zu den üblichen Speiseeisbestandteilen, nämlich entrahmter Milch, Fettsubstanzen, Stabilisierungs- und Emulgierungsmitteln, Aromastoffen, künstlichen Süßstoffen und weiteren Bestandteilen eine derartige Menge an hydrierten Polyolen mit einem Polymerisationsgrad (DP) $\geqq$ 3 zugibt, daß der Gehalt des resultierenden Speiseeises an diesen Polyolen mehr als 2%, vorzugsweise mehr als 3% und insbesondere mehr als 6% und weniger als 15%, vorzugsweise weniger als 12%, als Trockengewicht, bezogen auf das Endprodukt, beträgt, wobei diese hydrierten Polyole in Form eines hydrierten Stärkehydrolysats (HAH) mit einem Dextrose-äquivalent (DE) vor der Hydrierung zwischen 25 und 75, vorzugsweise zwischen 30 und 60, eingebracht werden, wobei die Zusammensetzung dieses hydrierten Stärkehydrolysats (HAH) die folgende ist:

Sorbit (Polymerisationsgrad DP 1): 0,1 bis 35%, vorzugsweise 0,1 bis 19%

Maltit (Polymerisationsgrad DP 2): 8 bis 80%, vorzugsweise 20 bis 75%

Polyole mit einem Polymerisationsgrad DP $\geqq$ 3: in Ergänzung zu 100

und wobei der Anteil an in das Speiseeis eingebrachtem hydrierten Stärkehydrolysat (HAH) vorteilhaft derart ist, daß der Gehalt des Speiseeises an hydriertem Stärkehydrolysat (HAH) zwischen 4,5 und 28%, vorzugsweise zwischen 6 und 23%, beträgt, wobei die Prozentanteile als Trockensubstanzgewicht, bezogen auf das Endprodukt, ausgedrückt sind.

4.  Verfahren gemäß Anspruch 3, dadurch gekennzeichnet, daß man die hydrierten Oligosaccharide und Polysaccharide mit einem Polymerisationsgrad DP $\geqq$ 3 in Form eines hydrierten Stärkehydrolysats HAH) mit der folgenden Zusammensetzung einbringt:
    - Sorbit          0,1 bis 19%
    - Maltit          35 bis 80%, vorzugsweise 40 bis 60%
    - Polyole mit einem Polymerisationsgrad DP>20:          Prozentanteil geringer als 3%
    - Polyole mit einem Polymerisationsgrad DP von 3 bis 20          in Ergänzung zu 100%
    wobei der Anteil an in das Speiseeis eingebrachtem hydrierten Stärkehydrolysat (HAH) vorteilhaft derart ist, daß der Gehalt des Speiseeises an hydriertem Stärkehydrolysat (HAH) zwischen 4,5 und 28%, vorzugsweise zwischen 6 und 23%, beträgt, wobei die Prozentanteile als Trockensubstanzgewicht, bezogen auf das Endprodukt, ausgedrückt sind.

5.  Verfahren zur Herstellung eines Speiseeises gemäß Anspruch 2, dadurch gekennzeichnet, daß
    - man einesteils den üblichen Speiseeisbestandteilen, nämlich entrahmter Milch, Fettbestandteilen, Stabilisierungs- und Emulgiermitteln, Aromastoffen, künstlichen Süßstoffen und weiteren Bestandteilen eine derartige Menge an hydrierten Polyolen mit einem Polymerisationsgrad DP $\geqq$ 3 zugibt, daß der Gehalt des resultierenden Speiseeises an diesen Polyolen mehr als 2%, vorzugsweise mehr als 3% und insbesondere mehr als 6% und weniger als 15%, vorzugsweise weniger als 12%, als Trockengewicht, bezogen auf das Endprodukt, beträgt, wobei diese hydrierten Polyole in Form eines hydrierten Stärkehydrolysats (HAH) mit einem Dextroseäquivalent (DE) vor der Hydrierung zwischen 25 und 75, vorzugsweise zwischen 30 und 60, eingebracht werden, wobei die Zusammensetzung dieses hydrierten Stärkehydrolysats (HAH) die folgende ist:
      - Sorbit          0,1 bis 19%
      - Maltit          35 bis 80%, vorzugsweise 40 bis 60%
      - Polyole mit einem Polymerisationsgrad DP>20:          Prozentanteil geringer als 3%
      - Polyole mit einem Polymerisationsgrad DP von 3 bis 20          in Ergänzung zu 100%
      wobei der Anteil an in das Speiseeis eingebrachtem hydrierten Stärkehydrolysat (HAH) vorteilhaft derart ist, daß der Gehalt des Speiseeises an hydriertem Stärkehydrolysat (HAH) zwischen 4,5 und 28%, vorzugsweise zwischen 6 und 23%, beträgt, wobei die Prozentanteile als Trockensubstanzgewicht, bezogen auf das Endprodukt, ausgedrückt sind;
    - man anderenteils in die Zusammensetzung desselben während seiner Herstellung anstelle der üblicherweise verwendeten Milchprodukte, insbesondere anstelle der entrahmten Milch, eine Menge von 3 bis 8 Gew.-% und vorzugsweise 4 bis 7 Gew.-%, auf das Endprodukt bezogen, an Milch-Proteinkonzentraten einbringt, die wenig oder keine Lactose enthalten und ausgewählt sein können aus der Gruppe, enthaltend:
      - Caseinate
      - ultrafiltrierte Milchproteine
      - ultrafiltrierte Serumproteine
      - Buttermilch und ultrafiltrierte Buttermilch
      - thermocoagulierte von Lactose befreite Serumproteine.